Europäisches Patentamt

European Patent Office

Office européen des brevets

(11) Veröffentlichungsnummer: **0 459 321 B1**

# EUROPÄISCHE PATENTSCHRIFT

(45) Veröffentlichungstag der Patentschrift: **30.08.95**

(21) Anmeldenummer: **91108477.0**

(22) Anmeldetag: **24.05.91**

(51) Int. Cl.⁶: **B29C 43/00,** B29B 13/02, B29K 105/12

(54) **Verfahren zur Herstellung von Formkörpern aus einem thermoplastischen Langfasergranulat.**

(30) Priorität: **26.05.90 DE 4017081**

(43) Veröffentlichungstag der Anmeldung:
**04.12.91 Patentblatt 91/49**

(45) Bekanntmachung des Hinweises auf die
Patenterteilung:
**30.08.95 Patentblatt 95/35**

(84) Benannte Vertragsstaaten:
**BE DE DK ES FR GB GR IT LU NL**

(56) Entgegenhaltungen:
**EP-A- 0 170 245          CH-A- 667 842
DE-A- 3 637 905          DE-A- 3 833 547
FR-A- 2 504 446          GB-A- 1 439 327**

(73) Patentinhaber: **HOECHST AKTIENGESELL-
SCHAFT**

**D-65926 Frankfurt am Main (DE)**

(72) Erfinder: **Henning, Jürgen**
**Gustav-Freytag-Strasse 29**
**W-6200 Wiesbaden (DE)**
Erfinder: **Maschkowski, Peter**
**Adelhöferstrasse 1**
**W-8701 Gollhofen (DE)**

Rank Xerox (UK) Business Services
(3.10/3.09/3.3.3)

## Beschreibung

Die vorliegende Erfindung betrifft ein Verfahren zur Herstellung von langfaserverstärkten Formkörpern aus einem thermoplastischen Material.

Zu den modernsten Entwicklungen auf dem Gebiet der Kunststoffe gehören die Versuche, durch die Einarbeitung von Verstärkungsfasern in technische und Hochleistungsthermoplaste das Spektrum der angebotenen Werkstoffe zu erweitern. Neben einer Verbesserung des Festigkeits- und Steifigkeitsverhaltens wird auch eine Kostenminimierung bei der Herstellung angestrebt. Aufgrund der notwendigen Konfektionierungskosten bezieht sich die Verbilligung weniger auf die reinen Rohstoffkosten als vielmehr auf die Kostenreduktion, die durch verringerte Wanddicken bzw. höhere Beanspruchbarkeit, durch vereinfachte Herstellungsverfahren, oder auch durch die Substitution von metallischen Werkstoffen erreicht werden kann. Dabei hängen sowohl die erzielbaren mechanischen Eigenschaften als auch die Verarbeitungsverfahren entscheidend von der maximal möglichen Faserlänge der Verstärkungsfasern ab. Diese Entwicklung läßt sich wie folgt einteilen:

a) Kurzfaserverstärkung mit Faserlängen um 0,2 mm,

b) Langfaserverstärkung mit Faserlängen ab etwa 4 mm,

c) Mattenverstärkung mit Faserlängen um einige cm.

(Die angegebenen Faserlängen beziehen sich immer auf die mittleren Längen im fertigen Formkörper).

Kurzfaserverstärkte Thermoplaste (a) kennzeichnet ein schlechtes Verhalten bezüglich der Schlagzähigkeit und der stoßartigen Belastung. Elastomer-modifizierte Kurzfaserverbundwerkstoffe gleichen diesen Nachteil in gewissem Maße aus, aber ein Absinken von Zug- und Biegefestigkeit sowie E-Modul muß in Kauf genommen werden.

Mittels einer Langfaserverstärkung (b) können alle mechanischen Kennwerte des thermoplastischen Materials deutlich verbessert werden, weshalb der Langfaserverstärkung zunehmendes Interesse entgegengebracht wird. Im Gegensatz zu Matten, Rovings und Geweben als Verstärkung (c) ist bei einer Beanspruchung der kurzen Fasern bei Thermoplasten in Faserrichtung an den Faserenden mit einer Spannungskonzentration in der anliegenden Matrix zu rechnen.

Zur Herstellung von langfaserverstärkten Formkörpern sind mehrere Verfahren prinzipiell geeignet:

Bei dem in der Kunststoff-Verarbeitung weit verbreiteten Spritzguß-Verfahren ist von Nachteil, daß der Fasergehalt beschränkt ist, und daß in Abhängigkeit von Art und Beschaffenheit der Formmasse, den Verarbeitungsbedingungen sowie der Geometrie der Formkörperkavität eine Faserlängenreduktion auftritt, welche die Festigkeit des Formteils negativ beinflußt.

Als Ursachen für die Faserschädigung kommen folgende Schritte bei der Herstellung in Betracht:

- Mechanisches Zerkleinern des Granulats beim Einziehen,
- Zerkleinern nach vorangegangenem Verklemmen aufgrund gegenseitiger Behinderung der Granulatkörner,
- Friktion zwischen metallischen Teilen und Fasern,
- Zerkleinern der Fasern durch Abscheren zwischen Schneckensteg und Zylinderwand,
- Scherbeanspruchung und Knicken der Fasern in der Schmelze,
- Gegenseitige Behinderung der Fasern aufgrund einer durch Fließwegumlenkung bedingten Erhöhung der Schergeschwindigkeit.

Bezüglich der näheren Angaben zum Spritzgießen von langfaserverstärkten Thermoplasten sei auf B. Schmid (Kunststoffe 79, (1989),7,624-630, Carl Hanser Verlag) verwiesen.

Langfaserverstärkte Formkörper lassen sich ferner durch Verpressen von vorplastifiziertem Material herstellen. Dieses Verfahren (wie es z.B. von A. Youngs in "Thermoplastic Matrix BMC-Materials and Processing", Polymer Composites Incorporated Winona, Minnesota, SPI-Conference, Februar 1986, Cincinnatti, Ohio, USA, Proceedings, beschrieben ist) hat den Nachteil, daß es erstens beim Plastifizieren und Dosieren zu einer Faserlängenreduktion kommt, daß zweitens die Fasern stark verschlungen sind, wodurch die Fließfähigkeit, insbesondere bei höherem Faseranteil, deutlich vermindert ist, und daß drittens ein hoher apparativer wie zeitlicher Aufwand von Nöten ist.

Ein weiteres Verfahren zur Herstellung von Probekörpern aus thermoplastischen Formmassen wird in der Deutschen Norm DIN 16770 (Teil 1, Febr. 1989) beschrieben. Hierbei wird ein Spritzgranulat verpreßt, wobei jedoch ein gleichmäßiges Einbringen in das Preßwerkzeug notwendig ist, da kein Fließen der thermoplastischen Masse auftritt. Es lassen sich auf diesem Wege nur sehr einfache Formkörper, wie z.B. quaderförmige Platten aus faserverstärktem Thermoplast herstellen.

Formkörper aus Thermoplasten, die längere Faserabschnitte enthalten, sind auch ausgehend von glasmattenverstärkten Materialien zugänglich. Hierbei wird aus dem glasmattenverstärkten Thermoplast (GMT) zunächst ein Halbzeug hergestellt, aus dem der gewünschte Formkörper durch Erwärmen über die Schmelztemperatur des Matrixwerkstoffes und anschließendes Fließpressen in Tauchkantwerkzeugen gefertigt wird. Von Nachteil bei diesem Verfahren ist, daß Formkörper mit komplizierten Elementen (feinen Rippen, Stegen, etc.) nur schwierig fehlerfrei hergestellt werden können, und daß sich die Materialzusammensetzung an diesen empfindlichen Steilen im Formkörper deutlich von der an anderen (dickeren) Stellen unterscheidet. Durch die Verformbarkeit der mattenförmigen Verstärkung ist die Fließfähigkeit des thermoplastischen Materials begrenzt (siehe z.B. Kunststoffe 79 (1989), 12, 1372 und S. Kupper in "GMT-Glasmattenverstärkte Thermoplaste", 20. Öffentliche Jahrestagung des Arbeitskreises Verstärkte Kunststoffe, Freudenstadt, 1.-3.10.1985) sowie J. Six in "GMT-ein Werkstoff und eine Verarbeitungstechnologie setzt sich durch" (21. Öffentliche Jahrestagung des Arbeitskreises Verstärkte Kunststoffe, Mainz, 11.1987).

Aus EP-A-170245 ist die Herstellung von faserverstärkten Schnitzeln aus thermoplastischen Material bekannt. Diese Schnitzel lassen sich durch Spritzgießen zu Stangen oder Platten verarbeiten. Es ist jedoch schwierig, komplizierte Formen gleichzeitig mit diesem Material auszufüllen. Aus GB 1439327 ist die Herstellung eines Formkörpers aus faserverstärktem Thermoplast-Material bekannt. Bei diesem Verfahren wird das nicht aufgeheizte Granulat in eine auf 170°C aufgeheizte Formkörperkavität eingefüllt. Da nach dem Abkühlen der Kavität ein Formkörper entnommen wird, muß das Granulat in dieser zwischenzeitlich geschmolzen worden sein.

Aufgabe der vorliegenden Erfindung ist es, ein Verfahren zur Herstellung von langfaserverstärkten Formkörpern aus einem thermoplastischen Material bereitzustellen, das zum einen möglichst kostengünstig und apparativ wenig aufwendig ist, und das zum anderen die Herstellung von fehlerfreien Formteilen mit für die jeweilige praktische Anwendung günstigen mechanischen Eigenschaften ermöglicht.

Diese Aufgabe wird durch ein Verfahren zur Herstellung eines Formkörpers ausgehend von einem stäbchenförmigen Granulat aus faserverstärktem thermoplastischen Material gelöst, wobei man unter hohem Druck eine vollständige Füllung einer Formkörperkavität mit dem geschmolzenen Granulat bewirkt, die Formkörperkavität abkühlt und dann den Formkörper entnimmt, man ein stäbchenförmiges Granulat mit einem Fasergehalt von 30 bis 80 Gew.-% und einer Länge von 10 bis 100 mm in eine Aufheizstation gibt, wo es aufgeheizt wird, bis das gesamte Material eine Temperatur oberhalb des Erweichungspunktes aufweist, man die Formkörperkavität, die auf eine Temperatur unterhalb des Erweichungspunktes des faserverstärkten Materials erwärmt wurde, mit dem aufgeheizten Material ohne Einsatz einer Schneckenmaschine beschickt, und dann die Füllung der Kavität bewirkt.

Das dem Herstellungsprozeß zugrundeliegende Granulat besteht aus stäbchenförmigen Körpern mit einem Durchmesser von vorzugsweise 0,1 bis 50 mm, insbesondere von 0,1 bis 5 mm, und einer Länge von vorzugsweise 20 - 55 mm, besonders bevorzugt von 25 - 50 mm.

Als thermoplastische Grundkomponente können die unterschiedlichsten Materialien dienen, insbesondere geeignet sind Polypropylen, Polyethylen, Polyester, Polyamid (wie z.B. ®Nylon), Polycarbonat, Polyurethan, Polyoxymethylen, Polyetherketon, Polyethylenterephthalat, Polyphenylensulfid und Styrol-haltige Polymere wie z. B. Acryl-Butylen-Styrol oder Styrol-Maleinsäureanhydrid. Prinzipiell sind auch Mischpolymere (z. B. aus verschiedenen Struktureinheiten der genannten Verbindungen) geeignet.

Als Faser für die Verstärkung des thermoplastischen Materials sind die gängigen Verstärkungsfasern einsetzbar, insbesondere geeignet sind Glas-, Kohlenstoff- und Aramidfasern. Prinzipiell sind jedoch auch keramische Fasern, wie Siliciumcarbidfasern oder metallische Fasern einsetzbar. Hybridfasern (wie z. B. Kohlenstoff/Aramid) sind prinzipiell ebenfalls geeignet.

Der Gewichtsanteil der Faser im faserverstärkten thermoplastischen Material ist in weitem Umfang variierbar. Einerseits sollte genug thermoplastisches Grundmaterial (Matrix) vorhanden sein, um einen Einschluß des gesamten Fasermaterials und Fließfähigkeit zu gewährleisten, andererseits setzt die gewünschte mechanische Verstärkung einen gewissen Mindestgehalt an Faser voraus. Der prozentuale Fasergehalt ist insbesondere von der Art des Fasermaterials und von der thermoplastischen Matrix abhängig. Vorzugsweise sind im faserverstärkten Thermoplast 40 bis 60 Gew.-%, insbesondere 45 bis 55 Gew.-% an Fasermaterial enthalten.

Das stäbchenförmige Granulat wird in beliebiger Verteilung in eine Aufheizstation gegeben und in dieser auf eine Temperatur, die oberhalb des Erweichungspunktes (Schmelzpunktes) des faserverstärkten Materials liegt erwärmt. Unter beliebiger Verteilung wird beispielsweise eine statistische Verteilung durch Aufstreuen des Granulates oder eine geordnete Verteilung z.B. durch Aufgeben auf ein Rillen-oder Schüttelblech verstanden.

Die Temperatur, auf die das thermoplastische Material gebracht wird, liegt im allgemeinen bei 100 bis 500°C, sie ist insbesondere vom verwandten thermoplastischen Material abhängig. Mit dem erhitzten thermoplastischen Material wird nun eine Formkörperkavität beschickt. Das Einfüllen kann manuell oder maschinell erfolgen. Von besonderer Bedeutung ist, daß die Kavität eine unterhalb des Schmelzpunktes des thermoplastischen Materials liegende Temperatur aufweist. Das Material wird mit einem Druck von vorzugsweise 10 bis 500 bar, vorzugsweise von 100 bis 300 bar, in der Kavität verpreßt. Hierdurch wird eine vollständige Ausfüllung der Kavität bewirkt. Das faserverstärkte Material kann aufgrund seiner verfahrensbedingten günstigen Fließeigenschaften in alle Teile der Form fließen. Die Schließgeschwindigkeit der Formkörperkavität sollte im allgemeinen mindestens 500 mm/s betragen, die Preßgeschwindigkeit mindestens 5 mm/s, vorzugsweise mehr als 10 mm/s.

Nach dem Preßvorgang wird der Formkörper in der Kavität abgekühlt, vorzugsweise in einem Zeitraum von 0,1 bis 5 Min. Prinzipiell sind auch längere Abkühlzeiten möglich, z.B. bei großen Formteilen und entsprechend massiven Kavitäten, jedoch ist ein längerer Zeitraum aus wirtschaftlichen Gründen wenig vorteilhaft. Die Temperatur auf die das Formteil abgekühlt wird muß auf jeden Fall unterhalb des Schmelzpunktes des thermoplastischen Materials liegen. Im allgemeinen ist eine Temperatur des Formteils von 20 bis 250°C geeignet, um den Formkörper aus der Kavität herauszulösen. Eine weit unterhalb des Erstarrungspunktes liegende Temperatur zur Entnahme des Formteils ist zumeist wenig vorteilhaft, weil der Zeitbedarf in diesem Fall hoch ist.

Die gemäß des soeben geschilderten Verfahrens hergestellten Formkörper haben besonders günstige mechanische Eigenschaften.
Als Material für diese Formkörper kommt, wie vorher beschrieben, ein weites Spektrum von thermoplastischen Matrixmaterialien und von Faserverstärkungsmaterialien in Betracht. Besonders günstig erweist sich der Einsatz eines glasfaserverstärkten Thermoplastes mit einem Gehalt an 30 bis 80 Gew.-%, vorzugsweise 40 bis 60 Gew.-%, insbesondere 45 bis 55 Gew.-%, Glasfaser. Die Glasfasern haben im allgemeinen eine Dicke von 400 bis 15 000 Tex, insbesondere eine Dicke von 5 bis 30 μm und eine Länge von 10 bis 100 mm, vorzugsweise von 20 bis 55 mm.

In einer besonders bevorzugten Ausführungsform der Erfindung besteht das thermoplastische Matrixmaterial aus Polyethylen oder Polypropylen und die Glasfasern haben eine Länge von 25 bis 50 mm.

Die Erfindung wird durch die nachfolgenden Beispiele näher erläutert:

## 1. Herstellung eines Formkörpers

Im vorliegenden Beispiel wurde von einem glasfaserverstärkten thermoplastischen Material der Firma PCI (Polymer Composites Incorporated, 5152 West Sixth Street, P.O. Box 30010, Winona, Minnesota 55987) ausgegangen. Das im Handel erhältliche stäbchenförmige Granulat trägt die Bezeichnung "TM Compel 2" Pellets" und besteht zu 50 Gew.-% aus Glasfaser mit einer Länge von etwa 50 mm sowie zu 50 Gew.-% aus einem Polypropylen. Die Stäbchen sind ca. 50 mm lang und haben einen Durchmesser von etwa 2 mm.

Es werden 1150 g dieses Granulats portionsweise mittels eines Heißluft- Umluftofens (durch Konvektion) erwärmt, wobei die Lufttemperatur 190 - 220°C beträgt. Der Aufheizvorgang wird fortgesetzt bis das gesamte Material eine Temperatur (oberhalb des Schmelzpunktes) von 170-210°C aufweist. Das dem Granulat zugrunde liegende Polypropylen besitzt einen Schmelzpunkt von 165°C.

Das auf diese Weise erwärmte Material wird von Hand in ein auf eine Temperatur von 120°C temperiertes Tauchkantenwerkzeug eingelegt und mit einer Schließgeschwindigkeit von 800 mm/s und einer Preßgeschwindigkeit von 15 mm/s verpreßt. Der Preßdruck beträgt 220 bar (bezogen auf die projizierte Formteiloberfläche). Die Materialbeschickung war zuvor auf einer Fläche von ca. 250 mm x 450 mm erfolgt, so daß die vollständige Ausfüllung der Kavität durch Materialfluß beim Preßvorgang erfolgt.

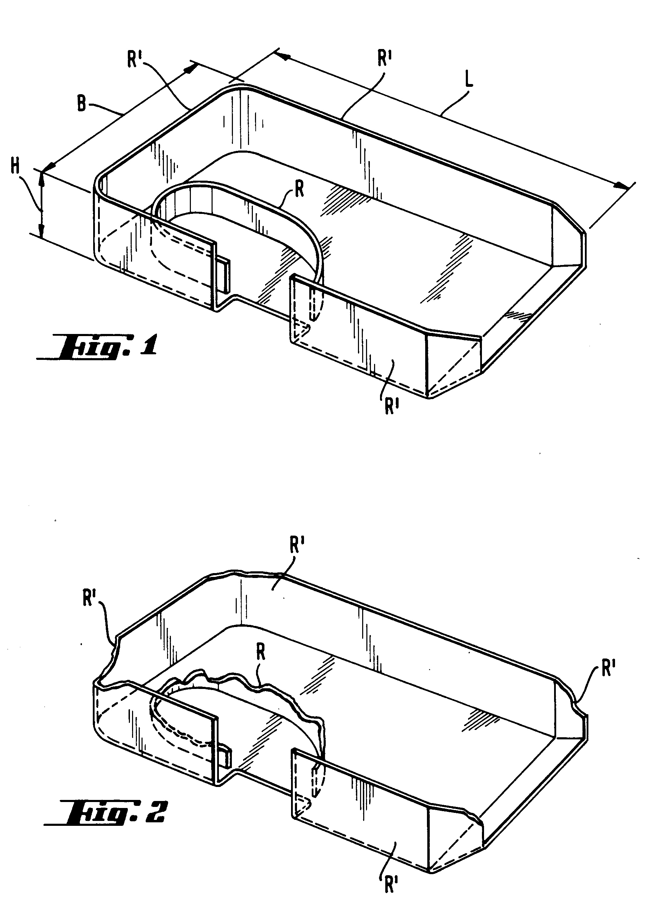

In **Figur 1** ist die Form und die Abmessungen (Länge (L) = 530 mm, Breite (B) 300 mm, Höhe (H) 80 mm) des hergestellten Formteils graphisch dargestellt. Nach Abkühlung des Formteils in der Kavität auf eine Temperatur von 120° (Abkühlzeit 60 sec.) erfolgt die Entformung nach dem Öffnen der Kavität durch Auswerferstifte. Wie Figur 1 zeigt ist das hergestellte Formteil vollständig ausgebildet. Das Formteil weist eine gleichmäßige Faserverteilung und folgende mechanischen Eigenschaften auf: Schlagbiegefestigkeit (ermittelt gemäß DIN 53 453) = 85 kg/m$^2$; Biegefestigkeit (nach ISO 178, jedoch Probenbreite 50 mm statt 10 mm (wegen Glasfaserlänge) und Probendicke zwischen 2,4 und 5,3 mm statt 4 ± 0,2 mm) = 192 N/mm$^2$.

## 2. Herstellung eines Formkörpers nach einem Vergleichsverfahren

Ausgehend von 1150 g des Granulats aus Beispiel 1 wird die gleiche Formkörperkavität wie in Beispiel 1 mit dem Material, welches zuvor auf Schneckenmaschinen vorplastifiziert wurde, beschickt. Das aufgeschmolzene Material (Temperatur 190° C) wird in der Kavität abgelegt und anschließend verpreßt;

Durch die intensive Vermischung und Verhakung der Fasern in der Schneckenmaschine und aufgrund der großen Faserlänge ist die Fließfähigkeit dieses Materials deutlich geringer als in Beispiel 1, so daß sich das Formteil auch unter Einwirkung des gleichen wie auch eines sehr viel höheren Druckes nicht vollständig ausbilden kann.
Das nach dem Vergleichsverfahren (Schneckenplastifizierung) hergestellte Formteil weist folgende (wie in Beispiel 1 bestimmte) Materialeigenschaften auf:

$$Schlagbiegefestigkeit = 78 \text{ kg/m}^2$$
$$Biegefestigkeit = 168 \text{ N/mm}^2.$$

In **Figur 2** ist ein nach diesem Verfahren hergestelltes Formteil dargestellt. Die zentrale dünne Rippe (R) (Durchmesser ca. 1 mm) und die Randbereiche des Formteils (R') wurden nicht vollständig mit Material gefüllt.

Aufgrund des schlechten Fließverhaltens ist deshalb im Vergleichsverfahren ein gleichmäßiges Aufbringen des faserverstärkten thermoplastischen Materials an alle Stellen der Formkörperkavität notwendig, was praktisch nur bei primitiven Formen möglich ist. Ferner muß mit einem größeren Prozentsatz an Ausschußformteilen gerechnet werden.

Das erfindungsgemäße Verfahren ist besser geeignet, fehlerarme bzw. fehlerfreie Formteile herzustellen, die hergestellten Formteile weisen günstigere mechanische Eigenschaften auf, und das Verfahren ist einfach und kostengünstig durchführbar.

**Patentansprüche**

1. Verfahren zur Herstellung eines Formkörpers ausgehend von einem stäbchenförmigen Granulat aus faserverstärktem thermoplastischen Material, wobei man unter hohem Druck eine vollständige Füllung einer Formkörperkavität mit dem geschmolzenen Granulat bewirkt, die Formkörperkavität abkühlt und dann den Formkörper entnimmt, dadurch gekennzeichnet, daß man ein stäbchenförmiges Granulat mit einem Fasergehalt von 30 bis 80 Gew.-% und einer Länge von 10 bis 100 mm in eine Aufheizstation gibt, wo es aufgeheizt wird, bis das gesamte Material eine Temperatur oberhalb des Erweichungspunktes aufweist, man die Formkörperkavität, die auf eine Temperatur unterhalb des Erweichungspunktes des faserverstärkten Materials erwärmt wurde, mit dem aufgeheizten Material ohne Einsatz einer Schneckenmaschine beschickt, und dann die Füllung der Kavität bewirkt.

2. Verfahren gemäß Anspruch 1, dadurch gekennzeichnet, daß das stäbchenförmige Granulat aus einem faserverstärkten Thermoplast mit einem Fasergehalt von 40 bis 60 Gew.-% besteht, und die Granulatstäbchen eine Länge von 20 bis 55 mm aufweisen.

3. Verfahren gemäß Anspruch 1, dadurch gekennzeichnet, daß das stäbchenförmige Granulat aus einem faserverstärkten Thermoplast mit eine Fasergehalt von 45 bis 55 Gew.-% besteht, und die Granulatstäbchen einen Durchmesser von 0,1 bis 50 mm und eine Länge von 25 bis 50 mm aufweisen.

4. Verfahren gemäß Anspruch 1, dadurch gekennzeichnet, daß das stäbchenförmige Granulat in statistischer Verteilung in eine Aufheizstation gegeben wird, und das faserverstärkte Material in dieser auf eine oberhalb des Erweichungspunktes liegende Temperatur von 100 bis 500 °C gebracht wird.

5. Verfahren gemäß Anspruch 1, dadurch gekennzeichnet, daß das stäbchenförmige Granulat in geordneter Verteilung in eine Aufheizstation gegeben wird, und das faserverstärkte Material in dieser auf eine oberhalb des Erweichungspunktes liegende Temperatur von 100 bis 500 °C gebracht wird.

6. Verfahren gemäß Anspruch 1, dadurch gekennzeichnet, daß man das erwärmte faserverstärkte Material in der Formkörperkavität unter einem Druck von 10 bis 500 bar verpreßt.

7. Verfahren gemäß Anspruch 1, dadurch gekennzeichnet, daß man das erwärmte faserverstärkte Material in der Formkörperkavität unter einem Druck von 100 bis 300 bar verpreßt.

8. Verfahren gemäß Anspruch 1, dadurch gekennzeichnet, daß man den Formkörper in der Formkörperkavität innerhalb von 0,1 bis 5 Minuten auf eine Temperatur zwischen 20 und 250 °C abkühlt und sodann aus der Kavität herauslöst.

9. Verfahren gemäß Anspruch 1, dadurch gekennzeichnet, daß der Formkörper aus einem faserverstärkten Thermoplast mit einem Fasergehalt von 30 bis 80 Gew.-% besteht, wobei die Fasern eine Länge von durchschnittlich 10 bis 100 mm aufweisen.

10. Verfahren gemäß Anspruch 1, dadurch gekennzeichnet, daß als thermoplastisches Material ein faserverstärkter Thermoplast aus der Gruppe Polyester, Polyamid, Polyethylen, Polyurethan, Polyoxymethylen, Polycarbonat, Polyetherketon, Polyethylenterephthalat, Acryl-Butylen-Styrol, Polyphenylensulfid, Polypropylen oder Polystyrol eingesetzt wird.

11. Verfahren gemäß Anspruch 1, dadurch gekennzeichnet, daß als thermoplastisches Material ein faserverstärktes thermoplastisches Mischpolymer eingesetzt wird.

**12.** Verfahren gemäß Anspruch 1, dadurch gekennzeichnet, daß die faserförmige Verstärkung des thermoplastischen Materials aus Glas, Kohlenstoff, Aramid, Metall oder aus einem Hybrid aus diesen Fasern besteht.

## Claims

**1.** A process for producing a molding starting from rod-shaped granules of a fiber reinforced thermoplastic material, by completely filling a mold cavity with the molten granules under elevated pressure, cooling the mold cavity and then removing the molding characterized in that rod-shaped granules having a fiber content of from 30 to 80% by weight and a length of from 10 to 100 mm are introduced into a heating-up station where they are heated until all the material has a temperature above the softening point, the heated material is charged into the mold cavity which has been heated to a temperature below the melting point of the fiber reinforced material without using a screw machine, and the filling the cavity.

**2.** The process of claim 1, characterized in that the rod-shaped granules comprise a fiber reinforced thermoplastic having a fiber content of from 40 to 60% by weight and the rod granules are from 20 to 55 mm in length.

**3.** The process of claim 1, characterized in that the rod-shaped granules comprise a fiber reinforced thermoplastic having a fiber content of from 45 to 55% by weight and the rod granules are from 0.1 to 50 mm in diameter and from 25 to 50 mm in length.

**4.** The process of claim 1, characterized in that the rod-shaped granules are introduced into a heating-up station in a random arrangement, and the fiber reinforced material is brought in the heating-up station to a temperature of from 100 to 500°C which is above the softening point.

**5.** The process of claim 1, characterized in that the rod-shaped granules are introduced into a heating-up station in an ordered arrangement, and the fiber reinforced material is brought in the heating-up station to a temperature of from 100 to 500°C which is above the softening point.

**6.** The process of claim 1, characterized in that the heated fiber reinforced material is pressed into the mold cavity under a pressure of from 10 to 500 bar.

**7.** The process of claim 1, characterized in that the heated fiber reinforced material is pressed into the mold cavity under a pressure of from 100 to 300 bar.

**8.** The process of claim 1, characterized in that the molding is cooled down in the mold cavity to a temperature between 20 and 250°C in the course of from 0.1 to 5 minutes and then removed from the cavity.

**9.** The process of claim 1, characterized in that the molding comprises a fiber reinforced thermoplastic having a fiber content of from 30 to 80% by weight, the fibers being on average from 10 to 100 mm in length.

**10.** The process of claim 1, characterized in that the thermoplastic material used is a fiber reinforced thermoplastic selected from the group consisting of polyester, poly-amide, polyethylene, polyurethane, polyoxymethylene, polycarbonate, polyether ketone, polyethylene terephthalate, acrylic-butylene-styrene, polyphenylene sulfide, polypropylene and polystyrene.

**11.** The process of claim 1, characterized in that the thermoplastic material used is a fiber reinforced thermoplastic copolymer.

**12.** The process of claim 1, characterized in that the fibrous reinforcement of the thermoplastic material comprises glass, carbon, aramide, metal or a hybrid of these fibers.

## Revendications

**1.** Procédé pour la préparation d'un objet moulé en partant d'un granulat sous forme de bâtonnets de matière thermoplastique renforcée de libres, en remplissant complètement sous pression élevée la cavité d'un moule par le granulat fondu, en refroidissant la cavité du moule et ensuite en enlevant l'objet moulé, caractérisé en ce qu'on introduit un granulat sous forme de bâtonnets ayant une teneur en libres de 30 à 80% en poids et une longueur de 10 à 100 mm, dans un dispositif de chauffage, où il est chauffé jusqu'à ce que la totalité de la matière présente une température supérieure au point de ramollissement, en chargeant la cavité du moule que l'on a chauffée à une température inférieure au point de ramollissement de la matière renforcée de fibres, d'une matière chauffée sans utilisation de machine à vis, et ensuite en remplissant la cavité.

2. Procédé selon la revendication 1, caractérisé en ce que le granulat sous forme de bâtonnets se compose d'une matière thermoplastique renforcée de fibres avec une teneur en fibres de 40 à 60% en poids, et les bâtonnets de granulat présentent une longueur de 20 à 55 mm.

3. Procédé selon la renvendication 1, caractérisé en ce que le granulat sous forme de bâtonnets se compose d'une matière thermoplastique renforcée de fibres avec une teneur en fibres de 45 à 55% en poids et les bâtonnets de granulat présentent un diamètre de 0,1 à 50 mm et une longueur de 25 à 50 mm.

4. Procédé selon la revendication 1, caractérisé en ce que le granulat sous forme de bâtonnets est introduit dans un dispositif de réchauffage dans une répartition statistique et la matière renforcée de fibres est chauffée dans celui-ci à une température de 100 à 500°C, température supérieure au point de ramollissement.

5. Procédé selon la revendication 1, caractérisé en ce que le granulat sous forme de bâtonnets est introduit dans un dispositif de chauffage dans une répartition contrôlée et la matière renforcée de fibres est chauffée dans celui-ci à une température de 100 à 500°C, température supérieure au point de ramollissement.

6. Procédé selon la revendication 1, caractérisé en ce que la matière renforcée de fibres chauffée est comprimée dans la cavité du moule sous une pression de 10 à 500 bars.

7. Procédé selon la revendication 1, caractérisé en ce que la matière renforcée de fibres chauffée est comprimée dans la cavité du moule sous une pression de 100 à 300 bars.

8. Procédé selon la revendication 1, caractérisé en ce qu'on refroidit l'objet moulé dans la cavité du moule en l'espace de 0,1 à 5 minutes à une température comprise entre 20 et 250°C, et ensuite on le dégage de la cavité.

9. Procédé selon la revendication 1, caractérisé en ce que l'objet moulé se compose de matière thermoplastique renforcée de fibres ayant une teneur en fibres de 30 à 80% en poids, les fibres présentant une longueur moyenne de 10 à 100 mm.

10. Procédé selon la revendication 1, caractérisé en ce qu'on utilise en tant que matière thermoplastique renforcée de fibres une matière prise dans le groupe comprenant le polyester, le polyamide, le polyéthyléne, le polyuréthanne, le polyoxyméthylène, le polycarbonate, la polyéthercétone, le téréphtalate de polyéthylène, l'acryl-butylène-styrène, le sulfure de polyphénylène, le polypropylène ou le polystyrène.

11. Procédé selon la revendication 1, caractérisé en ce qu'on utilise en tant que matière thermoplastique un copolymère thermoplastique renforcé de fibres.

12. Procédé selon la revendication 1, caractérisé en ce que le renfort sous forme de fibres de la matière thermoplastique se compose de verre, de carbone, d'aramides, de métal ou d'un hybride de ces fibres.

**Fig. 1**

**Fig. 2**